# EUROPÄISCHE PATENTSCHRIFT

(11) **EP 2 857 138 B1**
(45) Veröffentlichungstag und Bekanntmachung des Hinweises auf die Patenterteilung: **02.08.2017**
(21) Anmeldenummer: 13187154.3
(22) Anmeldetag: 02.10.2013
(51) Int. Cl.: B23K 26/00

(54) **Verfahren zur Herstellung einer Überwölbten Mikrostruktur**
Method for manufacture of an overarched microstructure
Procédé de fabrication d'une microstructure voûtée

(43) Veröffentlichungstag der Anmeldung: 08.04.2015
(73) Patentinhaber: LASER-LABORATORIUM GÖTTINGEN E.V., 37077 Göttingen (DE)
(72) Erfinder: Ilhemann, Jürgen, Dr., 37077 Göttingen (DE); Weichenhain-Schriever, Ruth, Dr., 37077 Göttingen (DE)
(74) Vertreter: Schneider, Peter Christian

(56) Entgegenhaltungen:
- JÜRGEN IHLEMANN ET AL: "Laser-induced congruent forward transfer of SiO x -layers", APPLIED PHYSICS A; MATERIALS SCIENCE & PROCESSING, SPRINGER, BERLIN, DE, Bd. 101, Nr. 3, 9. Juli 2010 (2010-07-09), Seiten 483-486, XP019844835, ISSN: 1432-0630
- JAHN M ET AL: "Ablation of silicon suboxide thin layers", APPLIED PHYSICS A; MATERIALS SCIENCE & PROCESSING, SPRINGER, BERLIN, DE, Bd. 101, Nr. 3, 3. Juli 2010 (2010-07-03), Seiten 533-538, XP019844832, ISSN: 1432-0630

## Beschreibung

### Gebiet der Erfindung

Die Erfindung bezieht sich auf ein Verfahren zur Erzeugung überwölbter Mikrostrukturen, umfassend die Schritte:
- Bereitstellen eines Trägersubstrats, auf dem eine zu strukturierende Hartschicht und darüber eine Confinement-Schicht aufgebracht ist,
- Bestrahlen der Hartschicht mit einem Strukturierungs-Puls räumlich mikrostrukturierten Laserlichtes einer vorbestimmten Strukturierungs-Fluenz und einer Strukturierungs-Wellenlänge, für die die Hartschicht einen Absorptionskoeffizienten von mindestens 10⁴ cm⁻¹ hat.

### Stand der Technik

Ein gattungsgemäßes Verfahren ist bekannt aus Ihlemann J.; Weichenhain-Schriever, R.: "Laser-induced congruent forward transfer of SiOx-layers", Appl Phys A (2010) 101: 483-486. Bei diesem Verfahren wird ein transparentes Trägersubstrat mit einer 830 nm dicken Schicht aus Siliziumsuboxid beschichtet. Über diese Hartschicht wird eine 2mm dicke PDMS-Schicht als Confinement gelegt. Dieses Target wird sodann rückseitig, d.h. durch das transparente Substrat hindurch, mit einem 25 ns langen Puls eines Krypton-Fluorid-Excimer-Lasers der Wellenlänge 248 nm mit einer Fluenz von 270 bzw. 600 mJ/cm² bestrahlt. Dieser Strukturierungs-Puls ist räumlich mikrostrukturiert, indem eine Punkt-oder Gittermaske in die Ebene der Hartschicht projiziert wird. Die Gitterperiode des projizierten Musters in der Hartschichtebene beträgt ca. 10 µm. Mit dem Strukturierungs-Puls werden also definierte Stellen der Hartschicht belichtet, während benachbarte Stellen unbelichtet bleiben bzw. deutlich weniger stark belichtet werden. Die oben und im Folgenden angegebene Fluenz bezieht sich jeweils auf die effektive Belichtungsfläche. An den Belichtungsstellen wird die Hartschicht aufgrund der Absorption der Laserstrahlung im Hartschichtmaterial, welches hierzu einen hohen Absorptionskoeffizienten aufweisen muss, der insbesondere größer als 10⁴ cm⁻¹ ist, ablatiert, wobei die ablatierten Bereiche weitgehend unversehrt auf die Confinement-Schicht transferiert werden und mit der Confinement-Schicht entfernt werden können. Es resultieren somit zwei zueinander negative Strukturen, nämlich eine auf der Confinement-Schicht und eine auf dem Trägersubstrat. Zur Erzeugung überwölbter Strukturen, d.h. von Strukturen, in denen Hartschichtbereiche Hohlräume brücken- oder bogenartig überwölben, muss der Prozess wiederholt werden. Hierzu wird die die eine Strukturhälfte tragende Confinement-Schicht auf eine frische, d.h. bislang unbearbeitete Hartschicht aufgebracht. Belichtung mit einem weiteren Strukturierungs-Puls, dessen Belichtungsbereiche sich überlappend mit den Hartschichtlücken der bereits strukturierten Hartschicht decken, führt zum Transfer von Hartschichtbereichen der zweiten Hartschicht auf die erste, bereits strukturierte Hartschicht, wobei sich die zweiten transferierten Hartschichtbereiche jeweils seitlich auf den ersten transferierten Hartschichtbereichen abstützen und die dazwischen liegenden Lücken der ersten Hartschicht brücken- oder bogenartig überwölben, sodass sich insgesamt eine überwölbte Mikrostruktur ergibt. Dieses Verfahren ist sehr aufwendig und verlangt eine extreme präzise Positionierung des Targets beim zweiten Strukturierungsschritt, da die im ersten Strukturierungsschritt strukturierte Hartschicht extrem genau zu der räumlichen Strukturierung des zweiten Strukturierungs-Pulses ausgerichtet sein muss.

Jahn, M.;Richter, J.; Weichenhain-Schriever, R.; Meinertz, J.; Ihlemann J.: "Ablation of silicon suboxide thin layers", Appl Phys A (2010) 101: 533-538 untersucht die Ablation von dünnen SiOₓ Filmen auf Quarzglas-Substraten durch einzelne Laserpulse im ultravioletten Farbspektrum.

### Aufgabenstellung

Es ist die Aufgabe der vorliegenden Erfindung, ein verbessertes Verfahren zur Erzeugung überwölbter Mikrostrukturen zur Verfügung zu stellen, welches insbesondere eine größere Variabilität der erzeugten Strukturen und eine Verringerung des Fertigungsaufwandes ermöglicht.

### Darlegung der Erfindung

Diese Aufgabe wird in Verbindung mit den Merkmalen des Oberbegriffs von Anspruch 1 dadurch gelöst, dass die Schichtdicke der Hartschicht kleiner ist als die Energiewirkungstiefe des Strukturierungs-Pulses und das Verhältnis der Strukturierungs-Fluenz zur Schichtdicke der Hartschicht dem 2- bis 10-fachen des Verhältnisses der Aufschmelzmindestfluenz der Hartschicht zur Energiewirkungstiefe entspricht,
wobei die Aufschmelzmindestfluenz diejenige Fluenz ist, die erforderlich ist, um mit einem ansonsten gleichartigen Laserpuls eine ansonsten gleichartige Hartschicht, deren Schichtdicke der Energiewirkungstiefe entspricht, bis zu deren Schmelztemperatur zu erwärmen.

Bevorzugte Ausführungsformen sind Gegenstand der abhängigen Ansprüche.

Die Erfindung beruht auf der überraschenden Erkenntnis, dass sich das Verhalten der Hartschicht qualitativ drastisch verändert, wenn eine materialabhängige Grenzschichtdicke unterschritten wird. Dann nämlich erfolgt in den stark belichteten Bereichen keine Ablation, sondern lediglich eine Abhebung des Hartschichtmaterials von dem Trägersubstrat, wobei Materialbrücken zu nicht bzw. schwächer belichteten Bereichen stehen bleiben. Die Form und Breite dieser Materialbrücken ist stark von der verwendeten Fluenz abhängig. Bei geringer Fluenz innerhalb des oben angegebenen Rahmens, entstehen kuppelartige Wölbungen einer insgesamt geschlossenen Oberfläche, grob vergleichbar einer von Verpackungen her bekannten Blasenfolie. Bei höheren Fluenzen innerhalb des oben angegebenen Rahmens reißen diese Blasen auf und es entstehen netzartige Strukturen mit zunehmend feineren Stege. Auch die Dimensionen der Belichtungsstruktur, insbesondere die Periodizität bei periodischen Mustern, die typischerweise im Bereich von 2 bis 20 µm liegen, beeinflussen die konkrete Form der Blasen-, Brücken- und Stegbildung.

Ein physikalischer Erklärungsansatz liegt darin, dass unterhalb der Grenzschichtdicke die Hartschicht in den Belichtungsbereichen über ihre gesamte Tiefe aufgeschmolzen wird, wobei der Energieeintrag, sofern Fluenzen innerhalb des oben angegebenen Rahmens verwendet werden, nur für eine moderate Gasbildung ohne exzessive Blasenbildung ausreicht. Diese moderate Gasbildung hebt das aufgeschmolzene Material vom Trägersubstrat ab; bei stärkerer Blasenbildung reißt die Oberfläche auf und das aufgeschmolzene Material verteilt sich gemäß seiner Oberflächenspannung auf mehr oder weniger breite Stege zwischen unbelichteten oder schwächer belichteten Hartschichtbereichen. Ein Abdampfen oder Spritzen in die Umgebung wird von der Confinement-Schicht unterbunden. Wegen des bestehenbleibenden Kontaktes aufgeschmolzener und nicht aufgeschmolzener Bereiche zueinander erfolgt kein lokaler Materialtransfer in die Confinement-Schicht. Erfolgt die Belichtung mit einem Muster geringen Kontrastes, sodass auch in den schwächer belichteten Hartschichtbereichen eine Ablösung vom Trägersubstrat, jedoch keine oder zumindest nur eine geringere Gasbildung als in den stärker belichteten Hartschichtbereichen erfolgt, bildet die erzeugte, Struktur ein freitragendes Netz, welches mit der Confinement-Schicht vom Trägersubstrat abgezogen werden kann.

Mithilfe der vorliegenden Erfindung können daher überwölbte Mikrostrukturen vorzugsweise mit einem einzigen Strukturierungs-Puls erzeugt werden. Ihre konkrete Form kann über weite Bereiche durch Variation der verwendeten Bestrahlungsfluenz und des Belichtungsmusters variiert werden. Eine Übertragung einer vorläufigen Struktur auf ein frisches Substrat und eine präzise Ausrichtung einer zweiten Bestrahlung auf die Geometrie der vorläufigen Struktur erübrigt sich, sodass die Herstellung der überwölbten Mikrostrukturen deutlich vereinfacht und beschleunigt und die Strukturvariationsbreite deutlich vergrößert werden.

Als kritische Schichtdicke der Hartschicht, die zur Erzeugung des der Erfindung zugrundeliegenden Effektes nicht überschritten werden darf, haben die Erfinder die von dem konkreten Material und den Bestrahlungsparametern abhängige, hier als Energiewirkungstiefe bezeichnete Summe aus optischer und thermischer Eindringtiefe des angewendeten Laserpulses erkannt. Die optische Eindringtiefe wird hier als das Doppelte des reziproken Absorptionskoeffizienten definiert, d.h. die Tiefe bei der die Fluenz an der Oberfläche auf das 1/e²-fache abgefallen ist. Die thermische Eindringtiefe wird hier definiert als proportional zur Quadratwurzel des Produktes aus der Temperaturleitfähigkeit (Wärmediffusivität) des Materials und der Dauer des Laserpulses. Der Proportionalitätsfaktor ist dabei √2 (Quadratwurzel aus 2). Vereinfacht ausgedrückt beschreibt die thermische Eindringtiefe somit in etwa, wie tief sich die thermische Anregung des Hartschichtmaterials während der Pulsdauer ausbreitet. Die thermische und optische Eindringtiefe und somit die Energiewirkungstiefe lassen sich für jedes Hartschichtmaterial auch experimentell bestimmen.

Als weiteren kritischen Faktor haben die Erfinder das Verhältnis von Strukturierungs-Fluenz und Schichtdicke erkannt, wobei als materialabhängiger Referenzwert das Verhältnis einer kritischen Fluenz, nämlich der Aufschmelzmindestfluenz, und der kritischen Schichtdicke, nämlich der Energiewirkungstiefe, heranzuziehen ist. Auf diese Weise lässt sich eine materialunabhängige technische Lehre angeben, mittels welcher im Einzelfall für eine konkrete Hartschicht beliebigen Materials ein konkreter Fluenzbereich ermittelt werden kann, innerhalb dessen eine erfindungsgemäße Mikrostrukturierung der Hartschicht möglich ist.

Es hat sich herausgestellt, dass für kleinere Schichtdicken, relativ höhere Strukturierungs-Fluenzen vorteilhaft sind. Dies gilt insbesondere für Schichtdicken der Hartschicht unterhalb der optischen Eindringtiefe. Als günstig hat sich es erwiesen, wenn das Verhältnis der Strukturierungs-Fluenz zur Schichtdicke der Hartschicht dem 5- bis 10-fachen des Verhältnisses der Aufschmelzmindestfluenz der Hartschicht zur Energiewirkungstiefe entspricht. Bei Schichtdicken der Hartschicht oberhalb der optischen Eindringtiefe, ist es hingegen in der Regel ausreichend, wenn das Verhältnis der Strukturierungs-Fluenz zur Schichtdicke der Hartschicht dem 2- bis 7-fachen des Verhältnisses der Aufschmelzmindestfluenz der Hartschicht zur Energiewirkungstiefe entspricht.

Das erfindungsgemäße Verfahren konnte bereits bei unterschiedlichen Materialien angewendet werden. Als besonders günstig erscheinen unter anderem amorph erstarrende Materialien, insbesondere nicht-stöchiometrische Suboxide, insbesondere Siliziumsuboxid (SiOₓ mit 0 < x < 2), Metall- und Halbleiteroxide wie Titanoxid und Siliziumoxid, Metalle wie Gold und Platin sowie UV-absorbierende Kunststoffe, z.B. Polyimid erwiesen. Die Verwendung von Siliziumsuboxid hat den besonderen Vorteil, dass im Ergebnis transparente Mikrostrukturen erzeugt werden können. Siliziumsuboxid ist nämlich für UV-Licht stark absorbierend. Das Licht eines Krypton-Fluorid-Excimer-Lasers der Wellenlänge 248 nm oder eines Argon-Fluorid-Excimer-Lasers der Wellenlänge 193 nm aber auch jedes anderen gepulsten UV-Lasers ist daher zur Anwendung des erfindungsgemäßen Verfahrens auf eine Siliziumsuboxid-Hartschicht besonders geeignet. Nach der Strukturierung kann bei einer bevorzugten Weiterbildung der Erfindung die strukturierte Hartschicht zu Siliziumoxid (SiO₂, Quarz) durchoxidiert werden. Dies erfolgt beispielsweise durch Tempern der strukturierten Hartschicht in sauerstoffhaltiger Umgebung bei hohen Temperaturen, vorzugsweise über mehrere Stunden. Alternativ sind bestrahlungsinduzierte Oxidationsprozesse von Siliziumsuboxid zu Siliziumoxid bekannt. Siliziumoxid ist bekanntermaßen hoch transparent für optische Strahlung sowie Strahlung im UV- und IR-Bereich.

Wie oben bereits erwähnt, ist es möglich, freitragende überwölbte Mikrostrukturen zu schaffen. Hierzu ist es erforderlich, die Hartschicht auch in nicht oder schwächer belichteten Bereichen vom Trägersubstrat abzulösen. Alternativ zu der oben bereits erläuterten Methode einer kontrastarmen Strukturierung der Belichtung ist bei einer Weiterbildung der Erfindung vorgesehen, dass die Hartschicht nach der Strukturierung durch den Strukturierungs-Puls mit einem Ablöse-Puls räumlich gleichförmigen Laserlichtes einer vorgegebenen Ablöse-Fluenz und einer Ablöse-Wallenlänge, für die die Hartschicht einen Absorptionskoeffizienten von mindestens 10⁴ cm⁻¹ hat, bestrahlt wird, wobei das Verhältnis der Ablöse-Fluenz zur Schichtdicke der Hartschicht dem 2- bis 4-fachen des Verhältnisses der Aufschmelzmindestfluenz der Hartschicht zur Energiewirkungstiefe entspricht. Bevorzugt wird für den Strukturierungs-Puls und den Ablöse-Puls die gleiche Lichtquelle verwendet, wobei der Ablöse-Puls lediglich eine geringere Fluenz und keine räumliche Strukturierung aufweist. Hierdurch werden die noch mit dem Trägersubstrat verbundenen Hartschichtbereiche abgelöst, ohne dass eine weitere, wesentliche Modifikation der mit dem Strukturierungs-Puls generierten Mikrostruktur erfolgen würde. Der Fachmann wird erkennen, dass die zur Ablösung erforderliche Energie auch von den Haftungseigenschaften der Hartschicht auf dem Substrat abhängt. Besser haftende Hartschichten werden eher zur Bildung substratfester, schlechter haftende Hartschichten eher zur Bildung freitragender Strukturen neigen. Beispielsweise kann eine zwischengelagerte Chromschicht die Haftung einer Gold-Hartschicht auf einem Quarz-Substrat verbessern.

Günstigerweise ist die Confinement-Schicht als Polymerschicht ausgebildet, die bei einer bevorzugten Weiterbildung als flüssige Mono- und/oder Oligomerschicht auf die Hartschicht aufgetragen und *in situ* durchpolymerisiert wird. Als geeignetes Polymer hat sich Polydimethylsiloxan (PDMS) erwiesen. Alternativ hierzu kann auch das von der Firma Dantronix unter der Bezeichnung Opticlean vertriebene Optik-Reinigungsmaterial verwendet werden, welches ebenfalls flüssig aufgetragen wird, um *in situ* durchzupolymerisieren. Grundsätzlich sind jedoch auch andere, beispielsweise flüssige, gallertige oder bereits vor Aufbringung durchpolymerisierte Confinement-Schichten denkbar. Eine günstige Dicke der Confinement-Schicht liegt im Bereiche zwischen 1 µm und 10 mm.

Wie von dem gattungsgemäßen Verfahren her grundsätzlich bekannt, kann vorgesehen sein, dass das Trägersubstrat für das Laserlicht der Bestrahlung transparent ist und die Bestrahlung der Hartschicht durch das Trägersubstrat hindurch erfolgt. Man spricht hier von rückseitiger Bestrahlung. Alternativ dazu kann jedoch auch vorgesehen sein, dass die Confinement-Schicht für das Laserlicht der Bestrahlung transparent ist und die Bestrahlung der Hartschicht durch die Confinement-Schicht hindurch erfolgt. In diesem Fall wird von vorderseitiger Bestrahlung gesprochen. Letztere bietet sich insbesondere dann an, wenn die Oberfläche eines nicht-transparenten Bauteils mit einer erfindungsgemäßen Strukturierung versehen werden soll.

Die mit dem erfindungsgemäßen Verfahren erzeugte überwölbte Mikrostruktur lässt sich in unterschiedlichsten technischen Bereichen einsetzen. Eine bevorzugte Verwendung ist diejenige als Oberflächenbeschichtung eines medizinischen Implantats. Unter dem Begriff der Oberflächenbeschichtung sei im Rahmen der hiesigen Beschreibung sowohl das Aufbringen einer separaten Schicht auf einen Träger als auch das Herausarbeiten einer Struktur aus der Oberfläche eines Trägermaterials verstanden. Aufgrund der hohen Biokompatibilität von Titan bzw. Titanoxid erscheint derzeit diese Materialwahl für die genannte Verwendung besonders vorteilhaft. Bei medizinischen Implantaten ergibt sich je nach Aufgabenstellung stets die Problematik, das Anwachsverhalten bestimmter Zelltypen an einer Oberfläche zu befördern oder zu unterbinden. Beispielsweise im Bereich der Dentalimplantologie ergeben sich hier häufig Zielkonflikte der Wachstumsförderung erwünschter Zelltypen und der gleichzeitigen Wachstumsunterdrückung unerwünschter Zelltypen, die nur mit extrem aufwendiger, räumlich höchst präziser Oberflächenstrukturierung aufgelöst werden können. Die breite Variabilität der mit dem erfindungsgemäßen Verfahren erzeugbaren Strukturen bildet einen erfolgsversprechenden Ansatz für die Auflösung derartiger Zielkonflikte.

Eine weitere günstige Anwendung der mit dem erfindungsgemäßen Verfahren erzeugten Strukturen ist als Oberflächenbeschichtung eines biologischen Reaktionsgefäßes. Auch hier stellt sich häufig die Problematik der Beförderung bzw. Unterdrückung des Anwachsens unterschiedlicher Zelltypen. Zudem spielen hier häufig Aspekte der Mikrofluidik eine wesentliche Rolle, der die mit dem erfindungsgemäßen Verfahren erzeugten, überwölbten und somit Mikrokanäle bildenden Strukturen gerecht werden können. Da biologische Reaktionsgefäße zudem häufig aus Beobachtungsgründen transparent sein müssen, stellt insbesondere Siliziumsuboxid hier ein günstiges Hartschichtmaterial dar, welches durch anschließende Durchoxidierung in den gewünschten, transparenten Zustand versetzt werden kann.

Eine weitere, vorteilhafte Verwendung der mit dem erfindungsgemäßen Verfahren erzeugten Mikrostrukturen ist als Oberflächenbeschichtung eines Katalysators. Hier dürften insbesondere Metalle und Halbleiter als Hartschicht relevant sein. Bekanntermaßen spielen bei einem Katalysator Wechselwirkungen temporär an die Oberfläche gebundener Moleküle und/oder Atome eine wesentliche Rolle. Die mit dem erfindungsgemäßen Verfahren erzeugte Mikrostrukturierung kann nicht nur zur Oberflächenvergrößerung, sondern gegebenenfalls aufgrund ihrer labyrinthischen Ausbildung zur Beeinflussung der Bindungszeit beitragen. Insbesondere Gold und Platin als bereits in herkömmlichen Katalysatoren eingesetzte Materialien spielen auch bei Katalysatoren mit mit dem erfindungsgemäßen Verfahren erzeugten Mikrostrukturen einer besondere Rolle.

Selbstverständlich sind auch andere Anwendungen, beispielsweise im Bereich der Sensorik, Umweltanalytik etc. denkbar.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine grob schematische Darstellung des erfindungsgemäßen Verfahrens in einer ersten Ausführungsform,
- Figur 2:: eine grob schematische Darstellung des erfindungsgemäßen Verfahrens in einer zweiten Ausführungsform,
- Figur 3:: eine rasterelektromikroskopische Aufnahme von mit dem erfindungsgemäßen Verfahren erzeugten Mikrostrukturen, erzeugt mit unterschiedlichen Masken bei unterschiedlichen Fluenzen,
- Figur 4:: eine rasterelektromikroskopische Aufnahme von mit dem erfindungsgemäßen Verfahren erzeugten Mikrostrukturen, erzeugt mit derselben Maske und Fluenz bei unterschiedlichen Fokussierungseinstellungen.

### Beschreibung bevorzugter Ausführungsformen

Gleiche Bezugszeichen in den Figuren deuten auf gleiche oder analoge Bauteile hin.

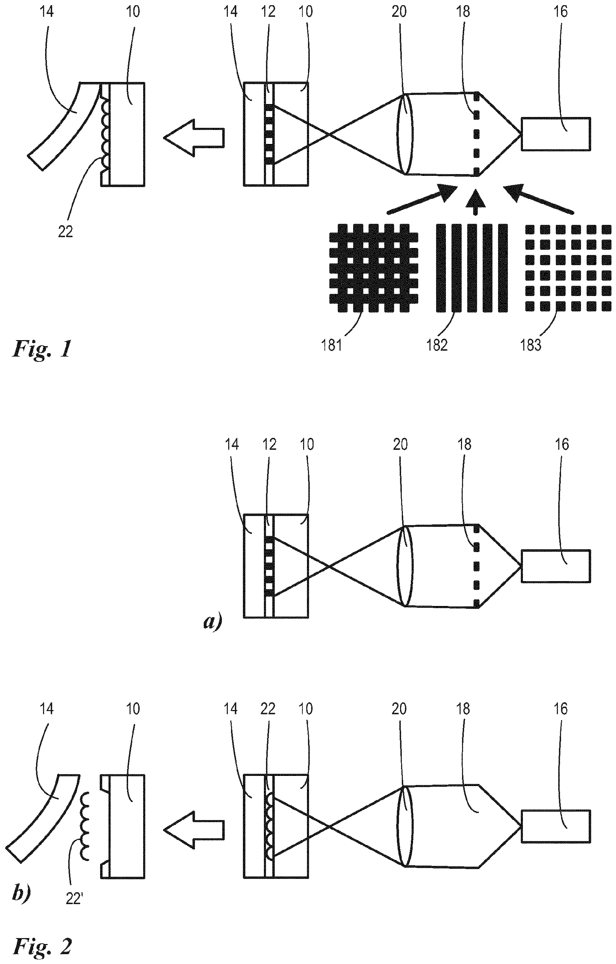

Figur 1 zeigt eine erste Ausführungsform des erfindungsgemäßen Verfahrens in einer stark schematisierten Darstellung. Auf einem transparenten Substratträgers 10, beispielsweise einem Mikroskop-Objektträger aus Quarz, ist eine zu strukturierende Hartschicht 12 aufgetragen. Über der Hartschicht 12 ist eine Confinement-Schicht 14 aufgebracht. Mittels eines gepulsten Lasers 16 wird eine Maske 18 über ein Objektiv 20 in die Hartschicht 12 projiziert. Die Projektion erfolgt vorzugsweise unter Verkleinerung der Abbildung der Maske 18. Im unteren Teil von Figur 1 sind drei mögliche Varianten der Maske 18 dargestellt, nämlich eine Kreuzgitterstruktur 181, eine Liniengitterstruktur 182 und eine Punktgitterstruktur 183. Selbstverständlich sind auch beliebige andere Gitterstrukturen und sonstige Muster denkbar.

Bei geeigneter Wahl der Schichtdicke der Hartschicht 12 und der Bestrahlungsparameter formt sich die Hartschicht 12 zu einer überwölbten Mikrostruktur 22 um, wobei die stark belichteten Schichtbereiche von dem Trägersubstrat 10 abgehoben sind und die nicht bzw. schwächer belichteten Schichtbereiche noch am Trägersubstrat 10 haften. Durch Abziehen der Confinement-Schicht 14 kann die Mikrostruktur 22 freigelegt werden.

Figur 2 zeigt eine zweite Ausführungsform des erfindungsgemäßen Verfahrens, wobei der in Teilfigur a dargestellte Verfahrensschritt identisch mit dem oben erläuterten ist. Anstelle des Abziehens der Confinement-Schicht 14 wird jedoch nach dem im ersten Verfahrensschritt angewandten Strukturierungs-Puls ein Ablöse-Puls aus der gleichen Laserquelle, jedoch ohne räumliche Strukturierung durch die Maske 18 und bei geringerer Fluenz abgegeben. Dieser Ablöse-Puls genügt, um die überwölbte Mikrostruktur 22 in den Bereichen, in denen sie noch an den Trägersubstrat angehaftet hat, abzulösen. Es entsteht eine freitragende Mikrostruktur 22', die nach Entfernen der Confinement-Schicht 14 separat verwendet werden kann.

Die nachfolgenden Tabellen geben Abschätzungen der erfindungsrelevanten Maximalschichtdicke der Hartschicht 12 und Aufschmelzmindestfluenzen für unterschiedliche Materialien, Belichtungswellenlängen und Pulsdauern an, wobei der Fachmann verstehen wird, dass es sich hierbei um modellabhängige Berechnungen handelt, die im Zweifel an der konkreten Hartschicht experimentell zu verifizieren wären. Tabelle 1 ist repräsentativ für Oxide und Suboxide, Tabelle 2 für Metalle und Tabelle 3 für organische Hartschichten, insbesondere Kunststoffe. Die Erfindung ist nicht auf die rein beispielhaft angegebenen Pulsdauern von 20 ns und 40 ns beschränkt, wenngleich sich Pulsdauern im Bereich zwischen 1 ns und 100 ns als besonders gut handhabbar erwiesen haben.

**Tabelle 1**

| | SiOₓ, x=1 | SiOₓ, x=1 | TiO₂ |
|---|---|---|---|
| Wellenlänge λ | 193 nm | 248 nm | 248 nm |
| Absorptionskoeffizient α | 4,6 x 10⁵ cm⁻¹ | 2,7 x 10⁵ cm⁻¹ | 5,5 x 10⁵ cm⁻¹ |
| Wärmeleitfähigkeit κ | 1,5 Wm⁻¹ K⁻¹ | 1,5 Wm⁻¹K⁻¹ | 2,5 Wm⁻¹K⁻¹ |
| Dichte ρ | 2,13 g cm⁻³ | 2,13 g cm⁻³ | 4,23 g cm⁻³ |
| spezifische Wärmekapazität Cₚ | 940 J kg⁻¹K⁻¹ | 940 J kg⁻¹K⁻¹ | 712 J kg⁻¹K⁻¹ |
| Temperaturleitfähigkeit (Wärmediffusivität) D=κp⁻¹Cₚ⁻¹ | 7,5 x 10⁻³ cm²s⁻¹ | 7,5 x 10⁻³ cm²s⁻¹ | 8,25 x 10⁻³ cm²s⁻¹ |
| Pulsdauer τ | 20 ns | 20 ns | 20 ns |
| Schmelztemperatur Tₘ | 1938 K | 1938 K | 2119 K |
| Reflektivität R | 0,1 | 0,1 | 0,1 |
| optische Eindringtiefe Lₒₚₜ=2α⁻¹ | 43 nm | 74 nm | 36 nm |
| thermische Eindringtiefe Lₜₕ=(2Dτ)^{1/2} | 173 nm | 173 nm | 182 nm |
| Energiewirkungstiefe Lₜₒₜ=Lₒₚₜ+Lₜₕ | 216 nm | 247 nm | 218 nm |
| Aufschmelzmindestfluenz Φ=(1-R)⁻¹ρ Cₚ Lₜₒₜ(Tₘ-T₀); T₀=293K | 79 mJ/cm² | 90 mJ/cm² | 132 mJ/cm² |

**Tabelle 2**

| | Au | Pt | Pt |
|---|---|---|---|
| Wellenlänge λ | 248 nm | 248 nm | 248 nm |
| Absorptionskoeffizient α | 8 x 10⁵ cm⁻¹ | 10⁶ cm⁻¹ | 10⁶ cm⁻¹ |
| Wärmeleitfähigkeit κ | 315 Wm⁻¹ K⁻¹ | 72 Wm⁻¹K⁻¹ | 72 Wm⁻¹K⁻¹ |
| Dichte ρ | 19,3 g cm⁻³ | 21,45g cm⁻³ | 21,45g cm⁻³ |
| spezifische Wärmekapazität Cₚ | 130 J kg⁻¹K⁻¹ | 130 J kg⁻¹K⁻¹ | 130 J kg⁻¹K⁻¹ |
| Temperaturleitfähigkeit (Wärmediffusivität) D=κρ⁻¹Cₚ⁻¹ | 1,25 cm²s⁻¹ | 0,26 cm²s⁻¹ | 0,26 cm²s⁻¹ |
| Pulsdauer τ | 20 ns | 20 ns | 40 ns |
| Schmelztemperatur Tₘ | 1337 K | 2041 K | 2041 K |
| Reflektivität R | 0,3 | 0,35 | 0,35 |
| optische Eindringtiefe Lₒₚₜ=2α⁻¹ | 25 nm | 20 nm | 20 nm |
| thermische Eindringtiefe Lₜₕ=(2Dτ)^{1/2} | 2240 nm | 1020 nm | 1442 nm |
| Energiewirkungstiefe Lₜₒₜ=Lₒₚₜ+Lₜₕ | 2265 nm | 1040 nm | 1482 nm |
| Aufschmelzmindestfluenz Φ=(1-R)⁻¹ρ Cₚ Lₜₒₜ(Tₘ-T₀); T₀=293K | 848 mJ/cm² | 780 mJ/cm² | 1112 mJ/cm² |

**Tabelle 3**

| | Polyimid |
|---|---|
| Wellenlänge λ | 248 nm |
| Absorptionskoeffizient α | 2,2 10⁵ cm⁻¹ |
| Wärmeleitfähigkeit κ | 0,16 Wm⁻¹ K⁻¹ |
| Dichte ρ | 1,42g cm⁻³ |
| spezifische Wärmekapazität Cₚ | 1090 J kg⁻¹K⁻¹ |
| Temperaturleitfähigkeit (Wärmediffusivität) D=κρ-¹Cₚ⁻¹ | 1,0 x 10 ⁻³ cm²s⁻¹ |
| Pulsdauer T | 20 ns |
| Schmelztemperatur Tₘ | 623 K |
| Reflektivität R | 0,1 |
| optische Eindringtiefe Lₒₚₜ=2α⁻¹ | 91 nm |
| thermische Eindringtiefe Lₜₕ=(2Dτ)^{1/2} | 63 nm |
| Energiewirkungstiefe Lₜₒₜ=Lₒₚₜ+Lₜₕ | 154 nm |
| Aufschmelzmindestfluenz Φ=(1-R)⁻¹ρ Cₚ Lₜₒₜ(Tₘ-T₀); T₀=293K | 8,8 mJ/cm² |

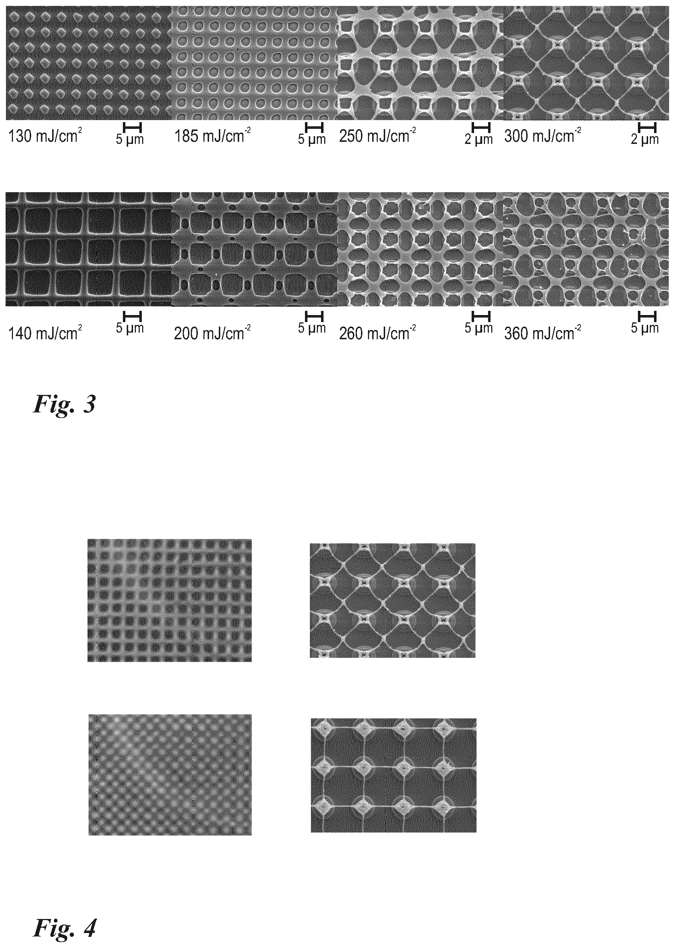

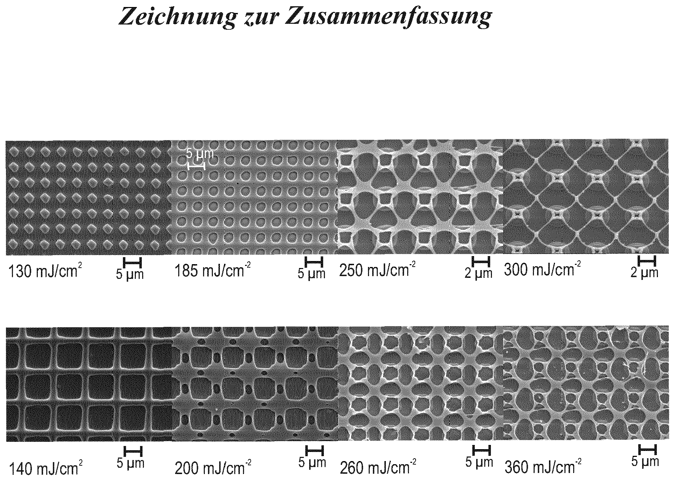

Figur 3 zeigt elektronenmikroskopische Aufnahmen von mit dem erfindungsgemäßen Verfahren erzeugten Mikrostrukturen an SiOₓ-Hartschichten einer Dicke 150 nm bei Beleuchtung durch eine Kreuzgittermaske einer Periodizität von 20 µm (obere Reihe von Teilfiguren) bzw. 40 µm (untere Reihe von Teilfiguren), wobei die Projektion der Maske auf die Hartschicht eine vierfache Verkleinerung umfasste. Die verwendete Laserstrahlung wurde mittels eines Krypton-Fluorid-Excimer-Lasers der Wellenlänge 248 nm bei einer Pulslänge von 20 ns erzeugt. Die Bestrahlung erfolgte jeweils mit unterschiedlichen Fluenzen, die in den jeweiligen Teilfiguren angegeben sind.

Zur Erzeugung transparenter Mikrostrukturen können die erzeugten SiOₓ-Strukturen nach der Strukturierung zu SiO₂-Quarz durchoxidiert werden, beispielsweise durch Tempern bei 1.000 °C über 16 Stunden in sauerstoffhaltiger Atmosphäre. Auf einer rasterelektromikroskopischen Aufnahme lässt sich kein Unterschied zwischen derart nachbehandelten SiO₂ und den zugrundeliegenden SiOₓ-Strukturen erkennen.

Wie aus Figur 3 deutlich erkennbar, hängt die konkrete Form der erzeugten Mikrostruktur stark von der projizierten Maskenperiodizität sowie der Fluenz ab. Ein physikalischer Erklärungsansatz wurde im allgemeinen Teil der Beschreibung bereits angegeben. Wesentlich ist insbesondere das effektive Beleuchtungsmuster einschließlich des Beleuchtungskontrastes. Diese Abhängigkeit kann man sich zur weiteren Strukturierungsvariation zu Nutze machen, indem die Maske mehr oder weniger scharf in die Hartschichtebene 12 abgebildet wird.

Figur 4 zeigt als rasterelektromikroskopische Aufnahmen zwei Strukturen, die sich mit denselben Masken- und Belichtungsparametern jedoch bei unterschiedlicher Fokussierung erzeugen lassen. Die Strukturen beider Teilfiguren wurden erzeugt aus einer 90 nm SiOₓ-Schicht unter Verwendung derselben Laserquelle wie oben im Zusammenhang mit Figur 3 erläutert. Bei der Maske handelte es sich um eine Punktgittermaske der Periodizität von 20 µm bei vierfacher Verkleinerung durch die Projektion. Während die Struktur von Teilfigur 1 bei exakter Fokussierung der Projektion in die Hartschichtebene erzeugt wurde, wurde die Struktur von Teilfigur b bei einer Defokusierung um 50 µm erzeugt. In den linken Teilbildern von Figur 4 sind die in der Hartschicht jeweils erzeugten, effektiven Intensitätsverteilungen dargestellt, in den rechten Teilbildern die jeweils erzeugten Strukturen. Gemäß dem sog. Talbot-Effekt lässt sich durch Platzierung der Hartschicht außerhalb der exakten Bildweite des Projektionssystems bei Abbildung periodischer Strukturen auch das Intensitätsmuster als solches verändern.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Trägersubstrat
- 12: Hartschicht
- 14: Confinement-Schicht
- 16: Laser
- 18: Maske
- 181: Kreuzgittermaske
- 182: Liniengittermaske
- 183: Punktgittermaske
- 20: Linse
- 22: überwölbte Mikrostruktur
- 22': freitragendende, überwölbte Mikrostruktur

## Patentansprüche

1. Verfahren zur Erzeugung überwölbter Mikrostrukturen (22, 22'), umfassend die Schritte:
- Bereitstellen eines Trägersubstrats (10), auf dem eine zu strukturierende Hartschicht (12) und darüber eine Confinement-Schicht (14) aufgebracht ist,
- Bestrahlen der Hartschicht (12) mit einem Strukturierungs-Puls räumlich mikrostrukturierten Laserlichtes einer vorbestimmten Strukturierungs-Fluenz und einer Strukturierungs-Wellenlänge, für die die Hartschicht (12) einen Absorptionskoeffizienten von mindestens 10⁴ cm⁻¹ hat,
**dadurch gekennzeichnet,**
**dass** die Schichtdicke der Hartschicht (12) kleiner ist als die Energiewirkungstiefe des Strukturierungs-Pulses und das Verhältnis der Strukturierungs-Fluenz zur Schichtdicke der Hartschicht dem 2- bis 10-fachen des Verhältnisses der Aufschmelzmindestfluenz der Hartschicht zur Energiewirkungstiefe entspricht, wobei die Aufschmelzmindestfluenz diejenige Fluenz ist, die erforderlich ist, um mit einem ansonsten gleichartigen Laserpuls eine ansonsten gleichartige Hartschicht, deren Schichtdicke der Energiewirkungstiefe entspricht, bis zu deren Schmelztemperatur zu erwärmen.

2. Verfahren nach Anspruch 1,
**dadurch gekennzeichnet,**
**dass** die Schichtdicke der Hartschicht (12) kleiner ist als die optische Eindringtiefe des Strukturierungs-Pulses und das Verhältnis der Strukturierungs-Fluenz zur Schichtdicke der Hartschicht dem 5- bis 10-fachen des Verhältnisses der Aufschmelzmindestfluenz der Hartschicht zur Energiewirkungstiefe entspricht.

3. Verfahren nach Anspruch 1,
**dadurch gekennzeichnet,**
**dass** die Schichtdicke der Hartschicht (12) größer ist als die optische Eindringtiefe des Strukturierungs-Pulses und das Verhältnis der Strukturierungs-Fluenz zur Schichtdicke der Hartschicht dem 2- bis 7-fachen des Verhältnisses der Aufschmelzmindestfluenz der Hartschicht zur Energiewirkungstiefe entspricht.

4. Verfahren nach einem der vorangehenden Ansprüche,
**dadurch gekennzeichnet,**
**dass** die Hartschicht (12) danach mit einem Ablöse-Puls räumlich gleichförmigen Laserlichtes einer vorbestimmten Ablöse-Fluenz und einer Ablöse-Wellenlänge, für die die Hartschicht (12) einen Absorptionskoeffizienten von mindestens 10⁴ cm⁻¹ hat, bestrahlt wird,
wobei das Verhältnis der Ablöse-Fluenz zur Schichtdicke der Hartschicht dem 2- bis 4-fachen des Verhältnisses der Aufschmelzmindestfluenz der Hartschicht zur Energiewirkungstiefe entspricht.

5. Verfahren nach einem der vorangehenden Ansprüche,
**dadurch gekennzeichnet,**
**dass** das Material der Hartschicht (12) SiOₓ mit 0 < x < 2 ist.

6. Verfahren nach Anspruch 5,
**dadurch gekennzeichnet,**
**dass** die strukturierte Hartschicht (12) zu SiO₂ durchoxidiert wird.

7. Verfahren nach einem der vorangehenden Ansprüche,
**dadurch gekennzeichnet,**
**dass** die Confinement-Schicht (14) als Polymerschicht ausgebildet ist.

8. Verfahren nach Anspruch 7,
**dadurch gekennzeichnet,**
**dass** die Confinement-Schicht (14) als flüssige Mono- und/oder Oligomerschicht auf die Hartschicht (12) aufgetragen und *in situ* durchpolymerisiert wird.

9. Verfahren nach einem der vorangehenden Ansprüche,
**dadurch gekennzeichnet,**
**dass** das Trägersubstrat (10) für das Laserlicht der Bestrahlung transparent ist und die Bestrahlung der Hartschicht (12) durch das Trägersubstrat (10) hindurch erfolgt.

10. Verfahren nach einem der Ansprüche 1 bis 8,
**dadurch gekennzeichnet,**
**dass** die Confinement-Schicht (14) für das Laserlicht der Bestrahlung transparent ist und die Bestrahlung der Hartschicht (12) durch die Confinement-Schicht (14) hindurch erfolgt.

## Claims

1. Method for the manufacture of overarched microstructures (22, 22'), comprising the steps:
- Providing a supporting substrate (10) on which a hard coat layer (12) to be patterned and, over it, a confinement layer (14), are applied,
- Irradiating the hard coat layer (12) using a patterning pulse of spatially microstructured laser light of a predetermined patterning fluence and a patterning wavelength for which the hard coat layer (12) has an absorption coefficient of at least 10⁴ cm⁻¹,
**characterized in that**
the thickness of the hard coat layer (12) is less than the energy penetration depth of the patterning pulse and the ratio of the patterning fluence relative to the thickness of the hard coat layer corresponds to 2 to 10 times the ratio of the melting threshold fluence of the hard coat layer relative to the energy penetration depth,
wherein the melting threshold fluence is the fluence required, using an otherwise equivalent laser pulse, to heat to its melting temperature, an otherwise equivalent hard coat layer, the thickness of which corresponds to the energy penetration depth.

2. Method according to Claim 1,
**characterized in that**
the thickness of the hard coat layer (12) is less than the optical penetration depth of the patterning pulse and the ratio of the patterning fluence relative to the thickness of the hard coat layer corresponds to 5 to 10 times the ratio of the melting threshold fluence of the hard coat layer relative to the energy penetration depth.

3. Method according to Claim 1,
**characterized in that**
the thickness of the hard coat layer (12) is greater than the optical penetration depth of the patterning pulse and the ratio of the patterning fluence relative to the thickness of the hard coat layer corresponds to 2 to 7 times the ratio of the melting threshold fluence of the hard coat layer relative to the energy penetration depth.

4. Method according to any of the preceding claims,
**characterized in that**
the hard coat layer (12) is subsequently irradiated with an ablation pulse of spatially uniform laser light at a predetermined ablation fluence and an ablation wavelength for which the hard coat layer (12) has an absorption coefficient of at least 10⁴ cm⁻¹, wherein the ratio of the ablation fluence relative to the thickness of the hard coat layer corresponds to 2 to 4 times the ratio of the melting threshold fluence of the hard coat layer relative to the energy penetration depth.

5. Method according to any of the preceding claims,
**characterized in that**
the material of the hard coat layer (12) is SiOₓ with 0 < x < 2.

6. Method according to Claim 5,
**characterized in that**
the patterned hard coat layer (12) is completely oxidized to SiO₂.

7. Method according to any of the preceding claims,
**characterized in that**
the confinement layer (14) is designed as a polymer layer.

8. Method according to Claim 7,
**characterized in that**
the confinement layer (14) is applied as a liquid monomer and/or oligomer layer onto the hard coat layer (12) and is completely polymerized *in situ.*

9. Method according to any of the preceding claims,
**characterized in that**
the supporting substrate (10) for the irradiation laser light is transparent and the hard coat layer (12) is irradiated through the supporting substrate (10).

10. Method according to any of Claims 1 to 8,
**characterized in that**
the confinement layer (14) for the irradiation laser light is transparent and the hard coat layer (12) is irradiated through the confinement layer (14).

## Revendications

1. Procédé de fabrication de microstructures voûtées (22, 22'), comprenant les étapes suivantes :
- mise à disposition d'un substrat porteur (10), sur lequel est apposée une couche dure (12) à structurer et, sur celle-ci, une couche de confinement (14),
- irradiation de la couche dure (12) par une impulsion de structuration d'une lumière laser spatialement microstructurée ayant une fluence de structuration prédéterminée et une longueur d'onde de structuration pour laquelle la couche dure (12) possède un coefficient d'absorption d'au moins 10⁴ cm⁻¹,
**caractérisé en ce que**
l'épaisseur de la couche dure (12) est inférieure à la profondeur d'action énergétique de l'impulsion de structuration, et que le rapport de la fluence de structuration à l'épaisseur de couche de la couche dure est égal à 2 à 10 fois le rapport de la fluence minimale de fusion de la couche dure à la profondeur d'action énergétique,
sachant que la fluence minimale de fusion est la fluence qui est nécessaire pour échauffer jusqu'à sa température de fusion, avec une impulsion laser autrement de même type, une couche dure autrement de même type dont l'épaisseur de couche est égale à la profondeur d'action énergétique.

2. Procédé selon la revendication 1, **caractérisé en ce que** l'épaisseur de couche de la couche dure (12) est inférieure à la profondeur de pénétration optique de l'impulsion de structuration, et que le rapport de la fluence de structuration à l'épaisseur de couche de la couche dure est égal à 5 à 10 fois le rapport de la fluence minimale de fusion de la couche dure à la profondeur d'action énergétique.

3. Procédé selon la revendication 1, **caractérisé en ce que** l'épaisseur de couche de la couche dure (12) est supérieure à la profondeur de pénétration optique de l'impulsion de structuration, et que le rapport de la fluence de structuration à l'épaisseur de la couche dure est égal à 2 à 7 fois le rapport de la fluence minimale de fusion de la couche dure à la profondeur d'action énergétique.

4. Procédé selon l'une des revendications précédentes, **caractérisé en ce que** la couche dure (12) est ensuite irradiée avec une impulsion de détachement d'une lumière laser spatialement uniforme ayant une fluence de détachement prédéterminée et une longueur d'onde de détachement pour laquelle la couche dure (12) possède un coefficient d'absorption d'au moins 10⁴ cm⁻¹,
sachant que le rapport de la fluence de détachement à l'épaisseur de la couche dure est égal à 2 à 4 fois le rapport de la fluence minimale de fusion de la couche dure à la profondeur d'action énergétique.

5. Procédé selon l'une des revendications précédentes, **caractérisé en ce que** le matériau de la couche dure (12) est du SiOₓ avec 0 < x < 2.

6. Procédé selon la revendication 5, **caractérisé en ce que** la couche dure structurée (12) est entièrement oxydée en SiO₂.

7. Procédé selon l'une des revendications précédentes, **caractérisé en ce que** la couche de confinement (14) est réalisée sous forme de couche polymère.

8. Procédé selon la revendication 7, **caractérisé en ce que** la couche de confinement (14) est apposée sur la couche dure (12) sous forme de couche liquide monomère ou oligomère et est entièrement polymérisée *in situ.*

9. Procédé selon l'une des revendications précédentes, **caractérisé en ce que** le substrat porteur (10) est transparent pour la lumière laser de l'irradiation, et que l'irradiation de la couche dure (12) s'effectue à travers le substrat porteur (10).

10. Procédé selon l'une des revendications 1 à 8, **caractérisé en ce que** la couche de confinement (14) est transparente pour la lumière laser de l'irradiation, et que l'irradiation de la couche dure (12) s'effectue à travers la couche de confinement (14).
